# EUROPÄISCHE PATENTANMELDUNG

(11) **EP 1 627 726 A1**
(43) Veröffentlichungstag der Anmeldung: **22.02.2006**
(21) Anmeldenummer: 04405514.3
(22) Anmeldetag: 18.08.2004
(51) Int. Cl.: B29D 31/00, B29C 70/22

(54) **Verbundfaserverdichter**

(71) Anmelder: ABB Turbo Systems AG, 5400 Baden (CH)
(72) Erfinder: Bättig, Josef, 5704 Egliswil (CH)
(74) Vertreter: ABB Patent Attorneys

(57) **Zusammenfassung**

Der faserverstärkte Kunststoffverdichter umfasst in der Nabe (11) einen Wickelungsstütz-Schaft (30) aus einem Metall mit einer hohen Festigkeit.

Der Wickelungsstütz-Schaft vereinfacht bei der Herstellung das Wickeln der Fasern und ermöglicht eine problemlose Montage des Verdichterrades auf der Welle.

## Beschreibung

### Technisches Gebiet

Die Erfindung bezieht sich auf das Gebiet der Verdichterräder. Sie betrifft ein Verbundfasernverdichterrad gemäss dem Oberbegriff des Patentsanspruchs 1 sowie ein Verfahren zur Herstellung eines solchen Verdichterrades.

### Stand der Technik

Faserverstärkte Kunststoffverdichterräder (Verbundfasernverdichterrad) haben gegenüber Verdichterrädern aus Metall den Vorteil des geringeren Gewichts, welches zu einem deutlich verbesserten Beschleunigungsverhalten führt.

US 3 670 382 beschreibt eine Produktionsmethode für ein faserverstärktes Kunststoffverdichterrad. Dabei werden die Fasern diametral durch eine geschlitzte Büchse gewickelt. Die Fasern verlaufen dabei durch das Zentrum der Büchse.

Durch die Schlitzbüchse ist die Formgebung des Verdichterrades insbesondere für Radialverdichter eingeschränkt. Da sich die Fasern alle im Zentrum kreuzen wird zudem axial sehr viel Platz benötigt. Die scharfe Umlenkung der Fasern beim Austritt aus der Schlitzbüchse ist zudem für eine optimale Werkstoffausnutzung eher schädlich, da die Kohle- und Glasfasern relative spröde sind.

JP 9217601 beschreibt ein weiteres Herstellungsverfahren eines Verbundfasernverdichterrades bei dem die Fasern ebenfalls durch eine Schlitzbüchse geführt werden und dann um einen zentralen Bolzen diametral auf die gegenüberliegende Schaufel verlaufen. Zudem wird zur Verstärkung des späteren Verbindungsbereichs zur Welle beim Aufbau des Faserngerüsts des Verdichterrades abwechselnd mit einer Schicht Fasern jeweils eine ringförmige Scheibe miteingewickelt. Nach dem Eingiessen des Matrixmaterials wird der zentrale Wickelbolzen entfernt.

Neben den oben genannten Problemen einer Schlitzbüchse kann bei einem Verdichterrad dieser Bauart die geringe Druckfestigkeit der Nabe in axialer Richtung problematisch werden. Bei der Montage wird das Verdichterrad durch die Zentrumsbohrung axial verspannt, wodurch die Fasern stark in Querrichtung beansprucht werden.

### Kurze Darstellung der Erfindung

Die Aufgabe der Erfindung besteht darin, ein Verbundfaserverdichterrad zu schaffen, welches ohne scharfe Umlenkungen gewickelte Fasern umfasst.

Die Aufgabe wird mit einem Verbundfaserverdichterrad gemäss Patentanspruch 1 gelöst.

Erfindungsgemäss ist ein sogenannter Wickelungsstütz-Schaft integrierter Bestandteil des Verbundfaserverdichterrades.

Er besteht vorzugsweise aus Vergütungsstahl oder einem anderen Metall mit einer hohen Festigkeit.

Der Wickelungsstütz-Schaft ermöglicht eine vereinfachte Herstellung der Wicklungen und aufgrund der schonenden Wicklungsweise eine optimale Werkstoffausnutzung der für die Wicklung verwendeten Fasern. Zudem wird durch den Wicklungsstütz-Schaft nach der Herstellung die Montage des Verdichterrades auf einer Welle vereinfacht.

### Kurze Beschreibung der Zeichnungen

Nachfolgend ist ein Ausführungsbeispiel des erfindungsgemässen Verdichterrades anhand von Figuren genauer erläutert. Hierbei zeigen
- Fig. 1: eine Ansicht eines Verdichterrades,
- Fig. 2: ein entlang der Rotationsachse geführter Schnitt durch das erfindungsgemässe Verbundfaserverdichterrad,
- Fig. 3: eine Ansicht des erfinderischen Verdichterrades während dem Wicklungsprozess,
- Fig. 4: eine Ansicht in radialer Richtung auf das Verdichterrad nach Fig. 3, und
- Fig. 5: ein entlang V-V geführter Schnitt durch das Verdichterrad nach Fig. 4.

### Weg zur Ausführung der Erfindung

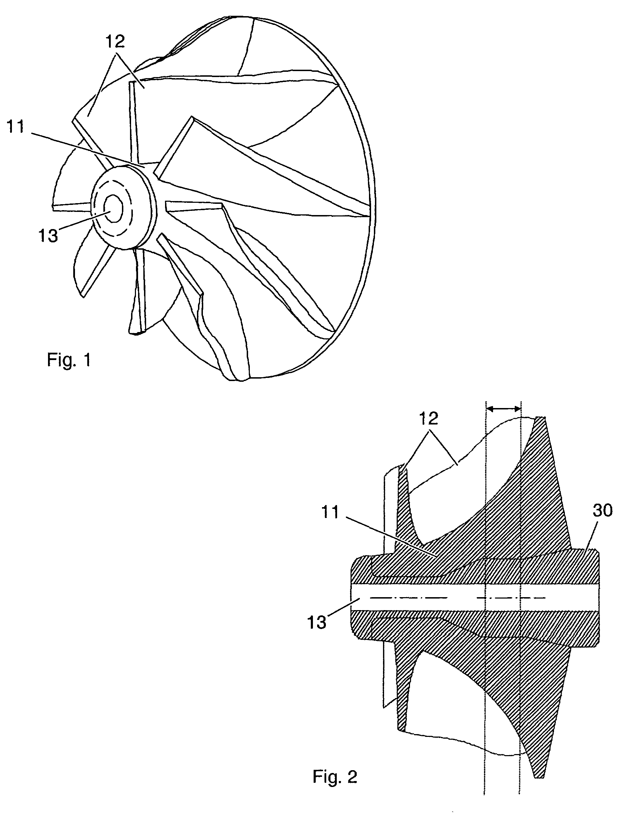

Fig. 1 zeigt ein Verdichterrad, welches auf einer rotierbaren Welle montiert werden kann, beispielsweise auf der Turbinenwelle eines Abgasturboladers. Das Verdichterrad umfasst eine Vielzahl von Laufschaufeln 12, welche mit einer Nabe 11 verbunden sind. Damit das Verdichterrad auf das Wellenende aufgeschoben werden kann, ist in das Verdichterrad eine durchgehende oder zumindest teilweise in die Nabe hineinreichende Zentralbohrung 13 eingelassen.

Fig. 2 zeigt einen Schnitt entlang der Rotationsachse durch das erfindungsgemässe Verbundfaserverdichterrad. Das Verdichterrad ist zweiteilig ausgebildet. Radial aussen angeordnet ist ein Verbundfaserteil, welches aus einer Vielzahl von Fasern besteht, die mit einem Matrixmaterial umgossen sind. Radial innen ist ein massiv ausgebildeter Schaft zur Stützung des gewickelten Verbundfaserteils angeordnet, der Wicklungsstütz-Schaft 30.

Der Schaft ist vorteilhafterweise aus einem Metall mit einer hohen Festigkeit gefertigt, beispielsweise aus Vergütungsstahl.

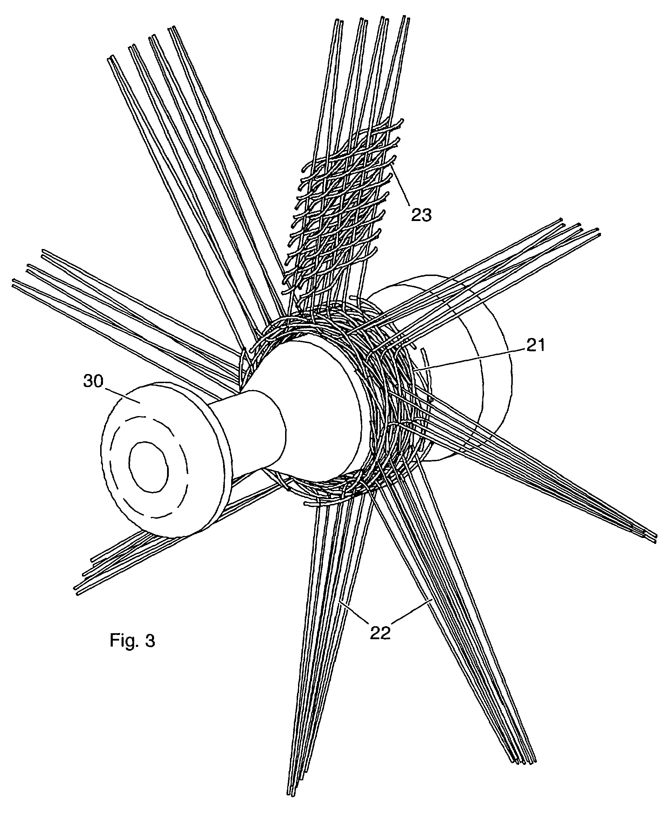

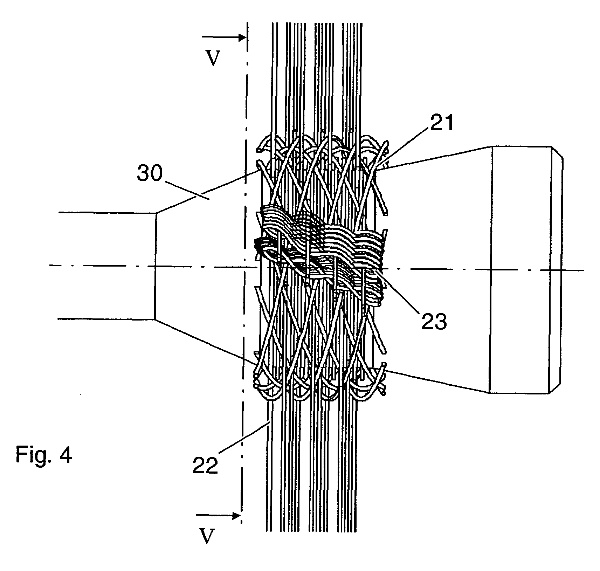

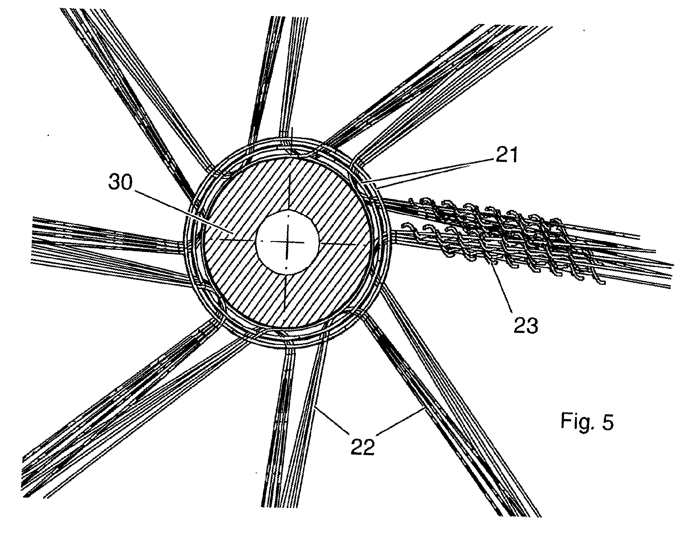

Wie aus den Figuren 3 bis 5 hervorgeht, wird das Verbundfaserteil des erfindungsgemässen Verdichterrades bei der Herstellung in drei Arbeitsschritten aus Fasern gewickelt. In den Figuren ist zur besseren Verständlichkeit nur der in Fig. 2 bezeichnete Teil der Wicklung dargestellt.

In einem ersten Schritt werden die Radialfasern 22, welche radial nach aussen geführt sind und im wesentlichen der Formung der Laufschaufeln dienen, um den Wicklungsstütz-Schaft 30 gelegt. Dabei umschlingen die einzelnen Fasern den Schaft vorzugsweise um 180° (± 90°). Auf diese Weise können Radialfasern für zwei Laufschaufeln kreuzungsfrei verlegt werden d.h. die Radialfasern liegen im Bereich um den Wickelungsstütz-Schaft aneinander, statt sich zu kreuzen. Dies ermöglicht dichtere Lagen von Radialfasern.

In einem zweiten Schritt werden anschliessend die Radialfasern 22 mit den Tangentialfasern 21 kreuzweise umflochten bis die gewünschte Nabenkontur erreicht ist. Die Nabe des Verdichterrades wird demnach durch den Schaft und die darauf aufgewickelten Tangentialfasern geformt. Der Wicklungswinkel dieser Tangentialfaser gegenüber der Verdichterradachse beträgt festigkeitsbedingt ± 30° bis ± 70°. Die Tangentialfaserwicklung ergibt für die Nabe die gewünschte Festigkeit sowie für die Radialfasern die erforderliche Fixierung in radiale Richtung. Die Wicklung erfolgt so, dass für die Radialfasern ein sanfter Übergang aus der Umfangsrichtung in die radial Richtung entsteht.

Zur Fixierung der Radialfasern während dem Wickeln kann eine beispielsweise stabförmige Stützstruktur verwendet werden, welche nach dem Wickeln in axiale Richtung herausgezogen werden kann.

In einem letzte Wicklungsschritt werden die Axialfasern 23 eingewoben. Diese geben den Laufschaufeln die gewünschte Steifigkeit (Eigenfrequenzen).

Als Faserwerkstoffe für Verdichterräder kommen hauptsächlich Metall-, Glas-, Aramid- und insbesondere Kohlenstoff-Fasern zum Einsatz. Als Matrixwerkstoffe eignen sich thermoplastische Kunststoffe wie beispielsweise Polycarbonat, Polyamide, Polyimide, Polyethylen, PEEK.

Für Verdichterräder mit höheren Betriebstemperaturen eignen sich auch niedrigmolekulare Reaktionsharze (Duroplaste) wie beispielsweise ungesättigte Polyester-Harze oder Epoxyd-Harze als Matrix-Werkstoff.

Die Fasern können trocken oder nass (mit Harz getränkt) gewickelt werden.

Ebenfass denkbar sind Fasern, welche mit einem thermoplastischen Kunststoff vorimprägniert worden sind. Nach dem Wickelprozess wird die gewickelte Vorform in ein Werkzeug mit der entsprechenden Negativkontur des Verdichterrades eingelegt.

Im Falle der trocken gewickelten Fasern wird anschliessend das Matrixmaterial als flüssiges Harz eingespritzt. Nach der Aushärtung kann das fertige Verdichterrad aus der Form entnommen werden. Bei den getränkten bzw. vorimprägnierten Fasern dient das Werkzeug zur Kalibrierung der Schaufel- bzw. Verdichterradoberfläche. Die nassen Fasern werden somit im geschlossenen Werkzeug ausgehärtet. Die vorimprägnierten Fasern werden in der geschlossenen Form erwärmt wodurch der thermoplastische Kunststoff auf den Fasern schmilzt und sich anschliessend beim Abkühlen zu einer kontinuierlichen Trägermatrix verbindet.

Beim Wickelprozess werden die Fasern soweit gespannt, dass eine stabile Vorform entsteht. Hilfreich ist auch der Einsatz eines Faserspanners, welcher die Faser beim Wickelprozess mit einer konstanten Zugspannung versieht.

Der Wicklungsstütz-Schaft wird bei der Montage des Verdichterrades in der Regel mittels einer Schraubenverbindung mit der Welle verbunden. Gegenüber einem herkömmlichen Verbundfasernverdichterrad ohne einen entsprechenden, festen Nabenkern lässt sich das erfindungsgemässe Verdichterrad einfacher montieren, da artgleiche Materialien (z.B. Stahl/Stahl) mittels herkömmlichen, d.h. bekannten und erprobten Welle-Nabe-Verbindungen verbunden werden. Demgegenüber würde ein Nabenkern aus Kunststoff mit seinen gegenüber Stahl stark unterschiedlichen physikalischen Eigenschaften (höherer thermischer Ausdehnungskoeffizient, geringerer Elastizitäts-Modul, geringere Druckfestigkeit, etc.) schwieriger auf der Welle zu montieren sein.

### Bezugszeichenliste

- 11: Nabe
- 12: Schaufeln
- 13: Zentralbohrung
- 21: Tangentialfasern
- 22: Radialfasern
- 23: Axialfasern
- 30: Wickelungsstütz-Schaft

## Patentansprüche

1. Verbundfaserverdichterrad mit einer Nabe und einer Vielzahl von rund um die Nabe angeordneten Laufschaufeln, umfassend eine Vielzahl von Fasern, insbesondere Kohle- oder Glasfasern, welche von einem Matrixmaterial, insbesondere einem Epoxidharz, Thermoplast oder einem anderen Kunststoff, umgossen sind,
**dadurch gekennzeichnet, dass**
die Nabe des Verbundfaserverdichterrades einen Schaft umfasst, welcher konzentrisch angeordnet und von den Fasern umwickelt ist.

2. Verbundfaserverdichterrad nach Anspruch 1, **dadurch gekennzeichnet, dass** der Schaft aus einem anderen Material gefertigt ist, als das Matrixmaterial.

3. Verbundfaserverdichterrad nach Anspruch 2, **dadurch gekennzeichnet, dass** der Schaft aus Metall oder einer Metallverbindung gefertigt ist.

4. Verbundfaserverdichterrad nach einem der Ansprüche 1 bis 3, **dadurch gekennzeichnet, dass** der Schaft und die mit dem Matrixmaterial umgossenen Fasern in axialer Richtung formschlüssig miteinander verbunden sind.

5. Verbundfaserverdichterrad nach Anspruch 4, **dadurch gekennzeichnet, dass** zur formschlüssigen Verbindung mit den mit dem Matrixmaterial umgossenen Fasern der Schaft zumindest zum einen axialen Ende hin eine zunehmende radiale Ausdehnung aufweist und/ oder zumindest an einem axialen Ende einen sich in radialer Richtung erstreckenden Vorsprung aufweist.

6. Verbundfaserverdichterrad nach einem der Ansprüche 1 bis 5, **dadurch gekennzeichnet, dass** der Schaft zumindest einseitig eine Zentralbohrung zur Aufnahme einer Welle aufweist.

7. Abgasturbolader, **gekennzeichnet durch** ein Verbundfaserverdichterrad nach einem der Ansprüche 1 bis 6.

8. Verfahren zum Herstellen eines mehrteiligen Verbundfaserverdichterrades, bei welchem Verfahren Fasern zur Bildung von Nabe und/ oder Laufschaufeln gewickelt werden, und die Fasern anschliessend mit einem Matrixmaterial umgossen werden, **dadurch gekennzeichnet, dass** die Fasern beim Wickeln um einen Schaft gewickelt werden, wobei der Schaft zumindest teilweise die Nabe des Verdichterrades bildet.
